# EUROPÄISCHE PATENTSCHRIFT

(11) **EP 2 470 814 B1**
(45) Veröffentlichungstag und Bekanntmachung des Hinweises auf die Patenterteilung: **06.11.2013**
(21) Anmeldenummer: 10747193.0
(22) Anmeldetag: 24.08.2010
(51) Int. Cl.: F16K 17/30, G05D 7/01

(54) **VORRICHTUNG ZUR ROHRBRUCHSICHERUNG**
PIPE BREAKAGE PROTECTION DEVICE
DISPOSITIF DE SÉCURITÉ HYDRAULIQUE POUR TUYAUTERIE

(30) Priorität: 25.08.2009 DE 102009038780; 25.08.2009 US 236746 P
(43) Veröffentlichungstag der Anmeldung: 04.07.2012
(73) Patentinhaber: Airbus Operations GmbH, 21129 Hamburg (DE)
(72) Erfinder: LAUDE, Jürgen, 28259 Bremen (DE)
(74) Vertreter: Maiwald Patentanwalts GmbH
(86) Internationale Anmeldenummer: PCT/EP2010/062332
(87) Internationale Veröffentlichungsnummer: WO 2011/023694

(56) Entgegenhaltungen:
- WO-A1-83/02988
- DE-A1- 19 510 586
- US-A- 3 424 196
- US-A- 5 099 875

## Beschreibung

### TECHNISCHES GEBIET

Die Erfindung betrifft eine Vorrichtung zur Rohrbruchsicherung, ein Verfahren zum Prüfen einer Vorrichtung zur Rohrbruchsicherung, eine Verwendung einer derartigen Vorrichtung zur Rohrbruchsicherung sowie ein Flugzeug mit mindestens einer Vorrichtung zur Rohrbruchsicherung, die dazu geeignet ist, das erfindungsgemäße Verfahren durchzuführen.

### HINTERGRUND DER ERFINDUNG

In einer Reihe von Geräten und Systemen, in denen Fluid durchströmte Rohre angeordnet sind, werden häufig sogenannte Rohrbruchsicherungen eingesetzt. Diese sind sowohl in häuslichen Anwendungen, wie etwa Waschmaschinen oder Geschirrspülern, als auch in technisch anspruchsvollen Hydrauliksystemen von Flugzeugen bekannt. Dort werden sie auch mit dem Begriff "hydraulic fuse" bezeichnet. Ihr Zweck ist, im Fall eines Rohrbruchs zu verhindern, dass Fluid vollständig aus einer Bruchstelle ausläuft. Im Falle der Verwendung innerhalb eines Hydrauliksystems in einem Flugzeug soll ferner durch eine derartige Rohrbruchsicherung sichergestellt werden, dass sämtliche Verbraucher, die physikalisch vor der Rohrbruchsicherung angeordnet sind, durch automatisches Verschließen eines defekten Rohrzweiges oder dergleichen weiter mit Hydraulikflüssigkeit versorgt werden können.

US 3 424 196 offenbart ein Strömungsregelventil mit einem linear bewegbar gelagerten Kolben, der über eine Feder in einer Ausgangsstellung gehalten wird, eine Stirnfläche mit einer Durchgangsbohrung und Seitenflächen mit Durchgangsbohrungen aufweist. Deren Anordnung und Dimensionierung können unterschiedliche Differenzdrücke auf den Kolben bewirken, die zur Verschiebung des Kolbens und damit zur variablen Abdeckung der Einlassöffnungen führen, so dass der Volumenstrom durch das Strömungsregelventil beeinflusst wird.

Derartige Rohrbruchsicherungen weisen üblicherweise ein internes Schließelement auf, das bei Überschreiten eines definierten Volumenstroms automatisch in eine Schließstellung gerät und somit einen weiteren Fluidverlust stoppt. Speziell beim Einsatz in Flugzeugen und in anderen sicherheitsrelevanten Systemen ergibt sich jedoch das Problem, dass derartige Rohrbruchsicherungen im eingebauten Zustand im Hydrauliksystem (in situ) nicht überprüft werden können. Unter normalen Bedingungen kann kein Volumenstrom hergestellt werden, der die Rohrbruchsicherung zum Schließen bringt.

### ZUSAMMENFASSUNG DER ERFINDUNG

Dementsprechend könnte es als Aufgabe angesehen werden, diesen oben beschriebenen Nachteil zu reduzieren oder gänzlich zu eliminieren. Die Aufgabe der Erfindung könnte daher besonders darin liegen, eine Vorrichtung zur Rohrbruchsicherung vorzuschlagen, bei der eine Sicherheitsüberprüfung im eingebauten Zustand ermöglicht wird, ohne den Volumenstrom für das betreffende Fluid durchströmte System über ein zulässiges Maximum zu erhöhen.

Die Erfindung löst die Aufgabe durch eine Vorrichtung zur Rohrbruchsicherung, die ein Gehäuse mit einem Zulauf und einem Ablauf, mit einem bewegbar in dem Gehäuse gelagerten Schließelement mit einer zum Zulauf hin gerichteten Stirnfläche und einer zum Ablauf hin gerichteten Schließfläche, mit mindestens zwei Strömungskanälen, die sich vom Zulauf zum Ablauf hin erstrecken, mit mindestens einer in den Strömungskanälen angeordneten Blende zum Erzeugen eines Druckabfalls eines vom Zulauf zum Ablauf strömenden Fluids und mit mindestens einem zwischen dem Ablauf und dem Schließelement angeordnetem Rückhalteelement aufweist. Gemäß einem ersten Aspekt der Erfindung weist eine derartige Vorrichtung ferner mindestens einen Prüfverschluss auf, der mindestens einen der Strömungskanäle verschließt, so dass die resultierende Strömungsgeschwindigkeit in den verbleibenden Strömungskanälen erhöht wird, der Druckabfall über der Blende folglich steigt und dadurch ein Bewegen des Schließelements in eine Schließstellung verursacht wird.

Die grundsätzliche Funktionsweise einer derartigen Vorrichtung wird im Folgenden mit anderen Worten beschrieben. Die erfindungsgemäße Vorrichtung zur Rohrbruchsicherung wird mit einer Rohrleitung in Serie geschaltet, so dass im Normalfall das entsprechende Fluid lediglich ungehindert durch die Vorrichtung strömt. In einem Gehäuse der Vorrichtung, das einen Zulauf und einen Ablauf für das Fluid aufweist, ist ein bewegbar gelagertes Schließelement angeordnet. Das Schließelement weist eine Stirnseite auf, die zum Zulauf hin zeigt. Das Schließelement weist ferner eine Schließfläche auf, die zum Ablauf zeigt. Ein durch den Zulauf in das Gehäuse strömendes Fluid strömt über die mindestens zwei Strömungskanäle um den Schließkörper herum zum Ablauf hin und tritt dort wieder aus. In einem Bereich zwischen dem Schließelement und dem Ablauf ist mindestens eine Blende angeordnet, durch die das Fluid strömen muss. Hierbei wird aufgrund des erhöhten Strömungswiderstands ein Druckabfall erzeugt. Dieser Druckabfall ist im Wesentlichen quadratisch von dem Volumenstrom des Fluids abhängig. Der am Zulauf anliegende Druck des Fluids wirkt auf die Stirnfläche des Schließelements und der am Ablauf anliegende Druck hinter der bereits durchströmten Blende wirkt auf die Schließfläche des Schließelements in der entgegengesetzten Richtung. Zusätzlich wirkt die Kraft eines Rückhalteelements auf die Schließfläche, die ebenfalls zum Zulauf hin bzw. zur Stirnfläche des Schließelements hin gerichtet ist.

Im Normalfall, d.h. bei einem Fluidvolumenstrom innerhalb des normalen Betriebsbereichs, wirkt ein Kräfteüberschuss auf die Schließfläche, so dass die erfindungsgemäße Vorrichtung geöffnet bleibt. Die Kraft des Rückhalteelements ist derart ausgelegt, dass sich dieser Kräfteüberschuss bei Erreichen eines vorgegebenen Maximalvolumenstroms aufhebt und die auf die Stirnfläche des Schließelements wirkende Kraft der auf die Schließfläche wirkenden Kraft entspricht oder geringfügig übersteigt. Daraus resultiert eine Bewegung des Schließelements in eine Schließstellung.

Der Kräfteüberschuss auf der Stirnfläche kann dadurch begründet werden, dass, wie vorangehend bereits erwähnt, der Druckabfall über der Blende zwischen der Schließfläche und dem Ablauf im Wesentlichen quadratisch vom Volumenstrom abhängt. Mit zunehmendem Volumenstrom steigt daher die resultierende Druckdifferenz zwischen dem Zulaufdruck und dem Ablaufdruck, so dass der Zulaufdruck ab einem bestimmten Volumenstrom ausreicht, das Schließelement gegenüber der im Verhältnis immer kleiner werdenden auf die Schließfläche wirkenden rückstellenden Kraft zur Schließstellung hin zu bewegen.

Die Anzahl der Strömungskanäle innerhalb der erfindungsgemäßen Vorrichtung ist weder streng vorgegeben noch limitiert. Es kann jedoch durch fertigungstechnische Vereinfachungen sinnvoll sein, beispielsweise zwei oder vier Strömungskanäle zu verwenden. Es sind selbstverständlich auch drei, fünf, sechs oder mehr Strömungskanäle möglich, die bei Bedarf mit mehr als einem Prüfverschluss kombiniert werden können. Bei der exemplarischen Verwendung zweier Strömungskanäle könnte durch Verschließen eines der Strömungskanäle die Strömungsgeschwindigkeit in dem verbleibenden Strömungskanal verdoppelt und dadurch der resultierende Druckabfall über die Blende im Wesentlichen vervierfacht werden. Bei entsprechendem Fluidvolumenstrom zwischen Zulauf und Ablauf könnte bereits ausreichen, einen Kräfteüberschuss auf der Stirnfläche zu erzeugen und das Schließelement in seine Schließstellung zu bewegen.

Die erfindungsgemäße Vorrichtung zeichnet sich gegenüber den herkömmlichen Vorrichtungen im Stand der Technik dadurch aus, dass ein Prüfverschluss in dem Gehäuse angeordnet ist, der mindestens einen Strömungskanal verschließen kann, um den resultierenden Volumenstrom bzw. die Strömungsgeschwindigkeit in den restlichen Strömungskanälen zu erhöhen. Aufgrund des Zusammenhangs zwischen der Strömungsgeschwindigkeit und dem Druckabfall resultiert die Schließung eines Strömungskanals in einem deutlich erhöhten Druckabfall über der Blende zwischen dem Zulauf und dem Ablauf und führt zum Erreichen eines Kräfteüberschusses auf der Stirnfläche des Schließelements, so dass sich das Schließelement in seine Schließstellung bewegt. Dies bedeutet, dass durch Schließen des Prüfverschlusses ein Zustand innerhalb der erfindungsgemäßen Vorrichtung erreicht wird, der ein Schließen der erfindungsgemäßen Vorrichtung veranlasst.

Diese konstruktiv einfache Lösung ist ein sehr effektiver Weg, um die Funktionsweise einer Vorrichtung zur Rohrbruchsicherung in situ überprüfen zu können, ohne dass deren Ausbau oder teilweise Demontage erforderlich ist. Dies erspart dem Betreiber einer sicherheitsrelevanten Anlage, dem Betreiber eines Flugzeugs mit mindestens einem sicherheitsrelevanten Hydrauliksystem oder anderen Systemen deutliche Wartungskosten, ohne dass die Komplexität des Systems oder der Anlage gesteigert werden muss.

Um zu verhindern, dass bereits bei kleinen Volumenstromspitzen aufgrund eventueller dynamischer Effekte beim raschen Schließen oder Öffnen von Ventilen oder dergleichen eine kurzzeitige Schließung der erfindungsgemäßen Vorrichtung erfolgt, kann das Schließelement in einem Buchsenabschnitt innerhalb des Gehäuses bewegbar gelagert werden, so dass zur Bewegung des Schließelements ausreichend Fluid in den Buchsenabschnitt zur Erhaltung der Volumenkonstanz nachströmen muss. Dieses Nachströmen von Fluid kann durch einen stirnseitig des Schließelements angeordneten Deckel für den Buchsenabschnitt mit einer darin integrierten und zum Zulauf gerichteten Drossel begrenzt werden, so dass die Auslenkung des Schließelements gedämpft wird. Sobald der Maximalvolumenstrom erreicht oder überschritten wird und auf der Stirnfläche ein Kräfteüberschuss vorliegt, drängt das Schließelement in seine Schließstellung, wobei sich der entstehende Hohlraum zwischen dem Schließelement und dem Deckel langsam mit Fluid anfüllt und dabei die Geschwindigkeit des Schließelements begrenzt. Auftretende Druck- bzw. Durchflussspitzen können dadurch vollständig abgefangen werden.

Es ist denkbar, bei mehreren Strömungskanälen mehrere Prüfverschlüsse vorzusehen, so dass etwa zwei Prüfverschlüsse oder mehr geschlossen werden müssen, um einen Funktionstest durchführen zu können.

In einer besonders vorteilhaften Weiterbildung der erfindungsgemäßen Vorrichtung ist der Prüfverschluss bewegbar an dem Gehäuse angeordnet, so dass durch Bewegen des Prüfverschlusses in eine Schließposition oder in eine Öffnungsposition ein Schließen oder ein Öffnen eines Strömungskanals erfolgt.

Der Prüfverschluss könnte in einer besonders vorteilhaften Weiterbildung der erfindungsgemäßen Vorrichtung drehbar gelagert sein und eine Verschlussfläche aufweisen, die in einer Öffnungsposition mit einer umgebenden Wandung des betreffenden Strömungskanals bündig abschließt und in einer Schließposition den betreffenden Strömungskanal verschließt. Die Schließposition könnte ausgehend von der Öffnungsposition etwa durch Drehen des Prüfverschlusses um 180° erreicht werden.

Weiterhin könnte es in einer günstigen Ausführungsform der erfindungsgemäßen Vorrichtung von Vorteil sein, dass der Prüfverschluss longitudinal in den betreffenden Strömungskanal auslenkbar ist, so dass beispielsweise durch Drücken oder Ziehen ein Schließen und Öffnen des betreffenden Strömungskanals erfolgen kann. Der Prüfverschluss könnte dabei federnd gelagert sein und bei Erreichen der Schließstellung des Schließelements wieder losgelassen werden.

In einer besonders vorteilhaften Weiterbildung der erfindungsgemäßen Vorrichtung ist der Prüfverschluss ausgestaltet, dass in seiner Schließposition eine Warnfarbe deutlich sichtbar wird und vor einem Betrieb der erfindungsgemäßen Vorrichtung bei geschlossenem Prüfverschluss gewarnt wird.

Es ist auch denkbar dass der Prüfverschluss in unbedrucktem Zustand betätigt und verriegelt wird, etwa aus Sicherheitsgründen oder weil die Betätigungskräfte unter Druck zu hoch wären. Nach Beendigung des Tests müsste die Vorrichtung von Hand zurückgestellt werden. Das dazu nötige Spezialwerkzeug könnte beispielsweise in der Luftfahrt wie üblich mit einer langen roten Warnfahne versehen werden.

Weiterhin könnte es besonders vorteilhaft sein, dass der Prüfverschluss mechanisch derart ausgestaltet ist, dass er nur über ein spezielles Werkzeug in eine Schließposition gebracht werden kann und das Spezialwerkzeug auch nur in einer Öffnungsposition wieder von dem Prüfverschluss abziehbar ist. Hierdurch kann besonders effektiv ein versehentliches Schließen des Prüfverschlusses verhindert werden.

Weiterhin wird die Aufgabe durch ein Verfahren zum Prüfen einer Vorrichtung zur Rohrbruchsicherung gelöst, wobei das Verfahren die Schritte des Betreibens des übergeordneten Systems, des Schließens mindestens eines Prüfverschlusses, das Abschalten des übergeordneten Systems bei Erreichen der Schließstellung des Schließelements und ein anschließendes optionales Betreiben des übergeordneten Systems umfasst.

Weiterhin wird die Aufgabe gelöst durch eine Verwendung einer Vorrichtung zur Rohrbruchsicherung in einem Flugzeug, sowie durch ein Flugzeug mit mindestens einem Hydrauliksystem und mindestens einer darin befindlichen erfindungsgemäßen Vorrichtung zur Rohrbruchsicherung.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt eine erfindungsgemäße Vorrichtung in einer seitlichen Schnittansicht.
Fig. 2 zeigt das erfindungsgemäße Verfahren in einer schematischen Blockansicht.
Fig. 3 zeigt ein Flugzeug mit mindestens einem Hydrauliksystem und mindestens einer darin angeordneten erfindungsgemäßen Vorrichtung zur Rohrbruchsicherung.
Fig. 4a bis 4c zeigen verschiedene exemplarische Prüfverschlüsse.

### DETAILLIERTE DARSTELLUNG EXEMPLARISCHER AUSFÜHRUNGSFORMEN

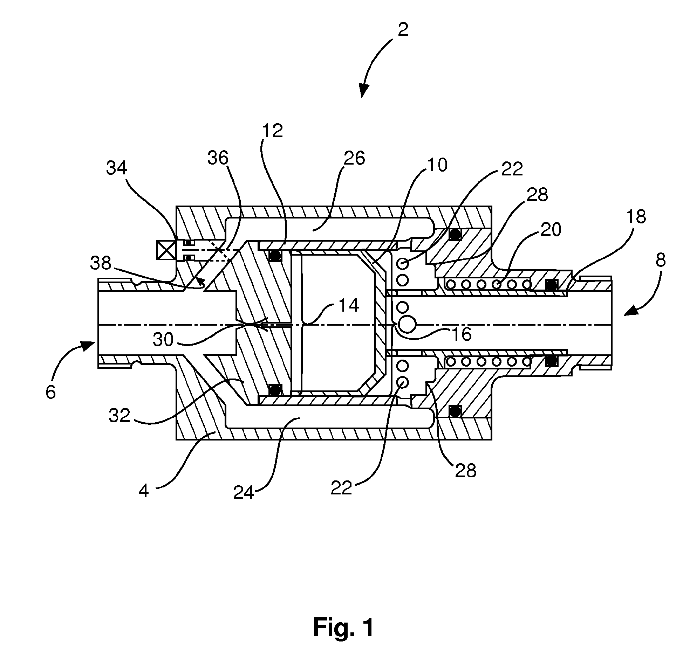

In Fig. 1 wird in einem seitlichen Schnitt eine erfindungsgemäße Vorrichtung zur Rohrbruchsicherung 2 gezeigt, die ein Gehäuse 4 mit einem Zulauf 6 und einem Ablauf 8 aufweist, sowie ein Schließelement 10, das in einem Buchsenabschnitt 12 bewegbar gelagert ist und eine Stirnfläche 14 und eine Schließfläche 16 aufweist. Ferner ist in dem Gehäuse 4 ein Rückhalteelement 18 angeordnet, das über eine Feder 20 an dem Gehäuse 4 im Bereich des Ablaufs 8 abgestützt ist. Zwischen dem Schließelement 10 und dem Rückhalteelement 18 sind mehrere Blenden 22 angeordnet, die einen Druckabfall eines von dem Zulauf 6 zum Ablauf 8 strömenden Fluids verursachen.

Zwischen dem Zulauf 6 und den Blenden 22 sind in dieser Darstellung zwei Strömungskanäle 24 und 26 ersichtlich, es können allerdings auch mehr Strömungskanäle in dem Gehäuse 4 angeordnet werden. Strömt Fluid durch den Zulauf 6 in die beiden Strömungskanäle 24 und 26, gerät das Fluid durch die Blenden 22 und erfährt hierdurch einen Druckverlust. Der Druckverlust steigt im Wesentlichen quadratisch mit der Strömungsgeschwindigkeit innerhalb der Strömungskanäle 24 und 26 an, so dass beispielsweise bei einem sich verdoppelnden Volumenstrom ein viermal so hoher Druckabfall über die Blenden 22 zu erwarten ist.

Das Schließelement 10 kann sich in der Zeichnungsebene nach rechts zum Ablauf 8 hin bewegen, wobei es bei Erreichen von Kanten 28 eine Schließstellung erreicht, in der die Blenden 22 verschlossen werden, so dass die Fluidströmung zwischen dem Zulauf 6 und dem Ablauf 8 vollständig unterbrochen wird. Die Bewegung des Schließelements 10 in diese Schließstellung wird bei zunehmender Druckdifferenz zwischen einem am Zulauf 6 liegenden Druck und einem am Ablauf 8 liegenden Druck verursacht. Übersteigt die auf die Stirnfläche 14 des Schließelements 10 wirkende Kraft die rücktreibende und auf die Schließfläche 16 wirkende Kraft, die sich aus dem Druck am Ablauf 8 und der Feder 20 ergibt, drängt das Schließelement 10 in seine Schließstellung. Diese Stellung kann erst dann wieder verlassen werden, wenn der Fluiddruck am Zulauf 6 unterbrochen wird.

Zum Ausgleichen von Druck- bzw. Durchflussspitzen, die sich etwa durch schnelle Öffnungs- oder Schließbewegungen von Ventilen oder dergleichen in einem Hydrauliksystem ergeben, ist ein mit einer Drossel 30 versehener Deckel 32 an dem Buchsenabschnitt 12 angeordnet. Drängt das Schließelement 10 in seine Schließstellung muss sich der zwischen dem Schließelement 10 und dem Deckel 32 befindliche Hohlraum zur Erhaltung einer Volumenkonstanz mit Fluid auffüllen, um eine Bewegung des Schließelements 10 zu erlauben. Durch eine entsprechende Auslegung der Drossel 30 kann dadurch besonders einfach eine Dämpfungswirkung auf die Bewegung des Schließelements 10 erreicht werden, die im Idealfall Druck- bzw. Durchflussspitzen am Zulauf 6 vollständig ausgleichen kann.

Damit eine Prüfung der erfindungsgemäßen Vorrichtung ermöglicht wird, ist an dem Gehäuse 4 ein Prüfverschluss 34 angeordnet, der den oberen Strömungskanal 26 verschließen kann. Hierfür weist der Prüfverschluss 34 eine Verschlussfläche 36 auf, der in einer Öffnungsposition des Prüfverschlusses mit einer Wandung 38 des Strömungskanals vollständig bündig ist. Wird der Prüfverschluss 34 in dieser Öffnungsposition etwa um 180° um dessen eigene Achse gedreht, verdreht sich die Verschlussfläche 36 bei entsprechender geometrischer Gestaltung des Prüfverschlusses derart, dass der Strömungskanal 26 vollständig geschlossen wird.

Der Strömungskanal 26 könnte hierfür einen Abschnitt aufweisen, dessen Mittelachse mit der Längsachse der erfindungsgemäßen Vorrichtung einen Winkel von 45° einschließt, so dass auch die Verschlussfläche 36 eine 45°-Neigung besitzt. Um 180° verdreht erstreckt sich die Verschlussfläche 36 senkrecht zur Wandung 38 und ragt dann über den gesamten Querschnitt des betreffenden Strömungskanals 26.

Wird der Prüfverschluss 34 in eine Schließstellung gebracht, endet der Volumenstrom in dem oberen Strömungskanal 26, so dass das gesamte einströmende Fluid durch den unteren Strömungskanal 24 tritt. Hier wird angenommen, dass die erfindungsgemäße Vorrichtung 2 lediglich zwei Strömungskanäle 24 und 26 aufweist. Der Druckverlust an den Blenden 22 ist aufgrund der nun doppelten Strömungsgeschwindigkeit auf ein Vierfaches angestiegen. Dieser deutlich höhere Druckverlust könnte bei entsprechender Auslegung der Federkraft dazu ausreichen, auf der Stirnfläche 14 des Schließelements 10 einen Kräfteüberschuss aufzubauen, der zum Bewegen des Schließelements 10 in seine Schließposition führt.

Die gezeigte Darstellung ist lediglich exemplarisch zu verstehen, so dass auch mehr Strömungskanäle in dem Gehäuse 4 angeordnet werden können. Dazu können auch Prüfverschlüsse in ausreichender Anzahl über die Strömungskanäle verteilt werden, die auch auf einem anderen Funktionsprinzip beruhen könnten. So wären auch Prüfverschlüsse denkbar, die in einen entsprechenden Strömungskanal 22 hineingedrückt werden.

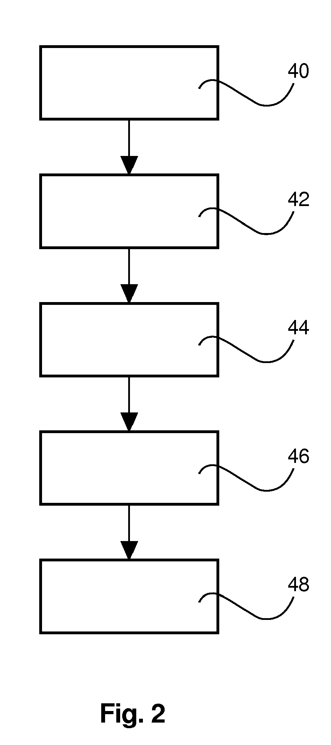

Fig. 2 zeigt exemplarisch ein erfindungsgemäßes Verfahren in einer schematischen Blockbilddarstellung. Nach dem Einleiten 40 des Betriebs eines übergeordneten Systems, beispielsweise eines Hydrauliksystems, werden nacheinander sämtliche vorhandenen Prüfverschlüsse 34 geschlossen 42 und die Reaktion sämtlicher in dem übergeordneten System angeordneter erfindungsgemäßer Vorrichtungen 2 geprüft 44. Nachdem dieser Test abgeschlossen ist, wird der Betrieb des übergeordneten Systems unterbrochen 46, so dass sich jeweils das Schließelement 10 jeder der erfindungsgemäßen Vorrichtungen 2 wieder zum Zulauf 6 hin bewegt. Anschließend kann ein erneutes Einleiten 48 des Betriebs des übergeordneten Systems erfolgen.

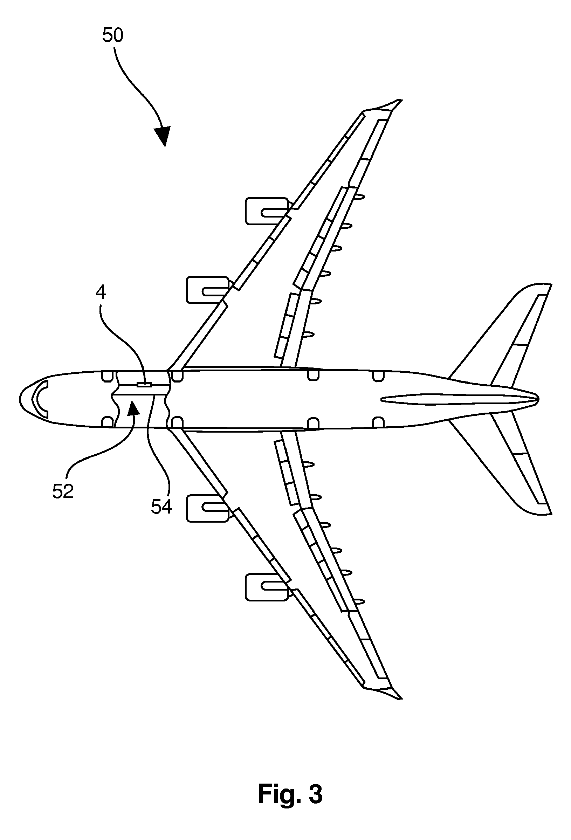

Weiterhin zeigt Fig. 3 ein Flugzeug 50, das mit mindestens einem Hydrauliksystem 52 ausgerüstet ist, an dessen Rohrleitungen 54 mindestens eine erfindungsgemäße Vorrichtung zur Rohrbruchsicherung angeordnet ist.

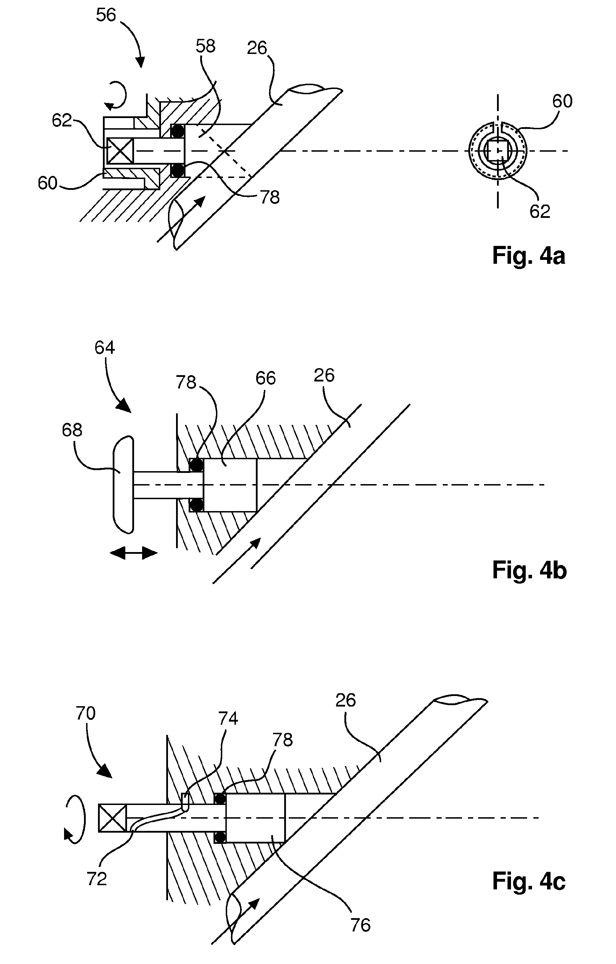

In Fig. 4a wird ein Prüfverschluss 56 mit einem abgeschrägten und rotierbar gelagerten Verschlusskörper 58 gezeigt, der durch eine Rotation in eine Öffnungsposition und eine Verschlussposition gebracht werden kann. Dieses Prinzip entspricht dem in Fig. 1 gezeigten Prüfverschluss 34. Die weitere Besonderheit liegt in einer geschlitzten Buchse 60, die ein Bedienende 62 des Prüfverschlusses 56 vor unbefugter oder unbedachter Bedienung schützt. Durch Verwenden eines geeigneten Werkzeugs kann das Bedienende 62 in Eingriff genommen und der Prüfverschluss 56 betätigt werden.

Ein weiterer möglicher Prüfverschluss 64 wird in Fig. 4b gezeigt, der einen eindrückbaren Verschlusskörper 66 aufweist. Ein Bedienende 68 in Form eines Knopfs oder dergleichen dient zum Betätigen des Prüfverschlusses 64.

Weiterhin wird in Fig. 4c ein zusätzlicher Prüfverschluss 70 dargestellt, der durch Rotation über eine gekrümmte Einfräsung 72, in der ein Stift 74 eingreift, in axialer Richtung einen Verschlusskörper 76 auslenkt.

Sämtliche dieser Beispiele sind lediglich exemplarisch zu verstehen. Es versteht sich, dass zur Abdichtung entsprechende Dichtungsringe 78 oder dergleichen eingesetzt werden.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: erfindungsgemäße Vorrichtung
- 4: Gehäuse
- 6: Zulauf
- 8: Ablauf
- 10: Schließelement
- 12: Buchsenabschnitt
- 14: Stirnfläche
- 16: Schließfläche
- 18: Rückhalteelement
- 20: Feder
- 22: Blende
- 24: Strömungskanal
- 26: Strömungskanal
- 28: Kante
- 30: Drossel
- 32: Deckel
- 34: Prüfverschluss
- 36: Verschlussfläche
- 38: Wandung
- 40: Einleiten Betrieb
- 42: Schließen Prüfverschluss
- 44: Prüfen der erfindungsgemäßen Vorrichtung
- 46: Unterbrechen Betrieb
- 48: Einleiten Betrieb
- 50: Flugzeug
- 52: Hydrauliksystem
- 54: Rohrleitung
- 56: Prüfverschluss
- 58: Verschlusskörper
- 60: Buchse
- 62: Bedienende
- 64: Prüfverschluss
- 66: Verschlusskörper
- 68: Bedienende
- 70: Prüfverschluss
- 72: Einfräsung
- 74: Stift
- 76: Verschlusskörper
- 78: Dichtung

## Patentansprüche

1. Vorrichtung (2) zur Rohrbruchsicherung, aufweisend:
- ein Gehäuse (4) mit einem Zulauf (6) und einem Ablauf (8);
- ein bewegbar in dem Gehäuse (4) gelagertes Schließelement (10) mit einer zum Zulauf (6) gerichteten Stirnfläche (14) und einer zum Ablauf (8) gerichteten Schließfläche (16);
- mindestens zwei Strömungskanälen (24, 26), die sich vom Zulauf (6) zum Ablauf (8) hin erstrecken;
- mindestens eine in den Strömungskanälen (24, 26) angeordnete Blende (22) zum Erzeugen eines Druckabfalls eines vom Zulauf (6) zum Ablauf (8) strömenden Fluids; und
- mindestens ein zwischen dem Ablauf (8) und dem Schließelement (10) angeordnetes Rückhalteelement (18);
wobei ein an dem Zulauf (6) anliegender Zulaufdruck des Fluids auf die Stirnfläche (14) des Schließelements (10) wirkt und ein an dem Ablauf (8) anliegender Ablaufdruck des Fluids auf die Schließfläche (16) des Schließelements (10) wirkt;
wobei das Rückhalteelement (18) derart dimensioniert ist, dass sich das Schließelement (10) bei einer vorbestimmten Mindestdifferenz zwischen Zulaufdruck und Ablaufdruck gegen eine Rückhaltekraft des Rückhalteelements (18) zum Ablauf (8) in eine Schließstellung bewegt;
wobei die Vorrichtung (2) ferner mindestens einen Prüfverschluss (34, 56, 64, 70) aufweist, der mindestens einen der Strömungskanäle (24, 26) verschließt, so dass die Strömungsgeschwindigkeit in den verbleibenden Strömungskanälen (24, 26) erhöht wird, der Druckabfall über die Blende (22) steigt und dadurch ein Bewegen des Schließelements (10) in die Schließstellung verursacht wird.

2. Vorrichtung (2) nach Anspruch 1,
wobei das Schließelement (10) in einem durch einen Deckel (32) geschlossenen Buchsenabschnitt (12) des Gehäuses (4) bewegbar gelagert ist,
wobei der Deckel (32) eine Drossel (30) zum gedrosselten Durchströmen von Fluid aufweist.

3. Vorrichtung (2) nach Anspruch 1 oder 2,
wobei der Prüfverschluss (34, 56, 64, 70) bewegbar an dem Gehäuse (4) angeordnet ist und durch Bewegen des Prüfverschlusses (34, 56, 64, 70) in eine Schließposition oder in eine Öffnungsposition ein Schließen oder ein Öffnen eines Strömungskanals (24, 26) erfolgt.

4. Vorrichtung (2) nach einem der vorhergehenden Ansprüche,
wobei der Prüfverschluss (34, 56, 64, 70) drehbar gelagert ist und eine Verschlussfläche (36) aufweist, die in einer Öffnungsposition mit einer umgebenden Wandung des betreffenden Strömungskanals (24, 26) bündig abschließt und in einer Schließposition den betreffenden Strömungskanal (24, 26) verschließt.

5. Vorrichtung (2) nach einem der Ansprüche 1 bis 3,
wobei der Prüfverschluss (34, 56, 64, 70) longitudinal in den betreffenden Strömungskanal (24, 26) zum Schließen auslenkbar ist.

6. Vorrichtung (2) nach einem der vorhergehenden Ansprüche,
wobei der Prüfverschluss (34, 56, 64, 70) federnd gelagert ist und ohne Einwirkung von außen selbständig von seiner Schließposition in seine Öffnungsposition zurückkehrt.

7. Vorrichtung (2) nach einem der vorhergehenden Ansprüche,
wobei der Prüfverschluss (34, 56, 64, 70) derart ausgestaltet ist, in einer Schließposition eine Warnfarbe deutlich sichtbar zu zeigen.

8. Vorrichtung (2) nach einem der vorhergehenden Ansprüche,
wobei der Prüfverschluss (34, 56, 64, 70) derart ausgestaltet ist, dass er nur über ein spezielles Werkzeug in eine Schließposition gebracht werden kann und das Spezialwerkzeug auch nur in einer Öffnungsposition wieder von dem Prüfverschluss (34, 56, 64, 70) abziehbar ist.

9. Verfahren zum Prüfen einer oder mehrerer Vorrichtungen (2) zur Rohrbruchsicherung , nach einem der Ansprüche 1 bis 8, in einem Fluid durchströmten System, aufweisend die Schritte:
- dem Einleiten des Betriebs des Systems;
- Schließen sämtlicher Prüfverschlüsse (34. 56. 64. 70):
- Prüfen der Reaktion der Vorrichtungen (2):
- Unterbrechen des Betriebs des Systems.

10. Verwendung einer Vorrichtung (2) nach einem der Ansprüche 1 bis 8 zur Rohrbruchsicherung in einem Fluid durchströmten System (52) eines Flugzeugs (50).

11. Flugzeug (50) mit mindestens einem Hydrauliksystem (52), mindestens einer Hydraulikrohrleitung (54) und mindestens einer daran befindlichen Vorrichtung (2) zur Rohrbruchsicherung, das dazu geeignet ist, eine in situ Funktionsprüfung durchzuführen, aufweisend:
- ein Gehäuse (4) mit einem Zulauf (6) und einem Ablauf (8);
- ein bewegbar in dem Gehäuse (4) gelagertes Schließelement (10) mit einer zum Zulauf (6) gerichteten Stirnfläche und einer zum Ablauf (8) gerichteten Schließfläche (16);
- mindestens zwei Strömungskanälen (24, 26), die sich vom Zulauf (6) zum Ablauf (8) hin erstrecken;
- mindestens eine in den Strömungskanälen (24, 26) angeordnete Blende (22) zum Erzeugen eines Druckabfalls eines vom Zulauf (6) zum Ablauf (8) strömenden Fluids; und
- mindestens ein zwischen dem Ablauf (8) und dem Schließelement (10) angeordnetes Rückhalteelement (18);
wobei ein an dem Zulauf (6) anliegender Zulaufdruck des Fluids auf die Stirnfläche (14) des Schließelements (10) wirkt und ein an dem Ablauf (8) anliegender Ablaufdruck des Fluids auf die Schließfläche (16) des Schließelements (10) wirkt;
wobei das Rückhalteelement (18) derart dimensioniert ist, dass sich das Schließelement (10) bei einer vorbestimmten Mindestdifferenz zwischen Zulaufdruck und Ablaufdruck gegen eine Rückhaltekraft des Rückhalteelements (18) zum Ablauf (8) in eine Schließstellung bewegt;
wobei die Vorrichtung (2) ferner mindestens einen Prüfverschluss (34, 56, 64, 70) aufweist, der mindestens einen der Strömungskanäle (24, 26) verschließt, so dass die Strömungsgeschwindigkeit in den verbleibenden Strömungskanälen (24, 26) erhöht wird, der Druckabfall über die Blende (22) steigt und dadurch ein Bewegen des Schließelements (10) in die Schließstellung verursacht wird.

## Claims

1. Device (2) for the protection of pipes against rupture, comprising:
- a housing (4) with an inflow (6) and an outflow (8);
- a closing element (10) mounted in a movable manner in the housing (4) with a front face (14) facing the inflow (6) and a closing surface (16) facing the outflow (8);
- at least two flow channels (24, 26) extending from the inflow (6) to the outflow (8);
- at least one orifice (22), arranged in the flow channels (24, 26) to create a pressure drop in a fluid flowing from the inflow (6) to the outflow (8), and
- at least one retainer element (18) arranged between the outflow (8) and the closing element (10);
wherein an inflow pressure of the fluid at the inflow (6) acts on the front face (14) of the closing element (10) and an outflow pressure of the fluid at the outflow (8) acts on the closing surface (16) of the closing element (10);
wherein the retainer element (18) is dimensioned in such a way that, at a predetermined minimum difference between the inflow pressure and the outflow pressure, the closing element (10) moves against a retaining force from the retainer element (18) towards the outflow (8) into a closing position;
wherein the device (2), further comprises at least one test closure (34, 56, 64, 70), that closes at least one of the flow channels (24, 26), so that the flow speed in the other flow channels (24, 26) is increased, the pressure drop through the orifice (22) increases and a movement of the closing element (10) is thus induced.

2. Device (2) of claim 1,
wherein the closing element (10) is mounted in a movable manner in a bushing section (12) closed by a cover (32) of the housing (4);
wherein the cover (32) comprises a choke (30) to choke the flow of fluid.

3. Device (2) of claim 1 or 2,
wherein the test closure (34, 56, 64, 70) is arranged on the housing (4) and, by moving the test closure (34, 56, 64, 70) into a closing or an opening position, an opening or a closing of the flow channel (24, 26) takes place.

4. Device (2) of one of the preceding claims,
wherein the test closure (34, 56, 64, 70) is mounted in a rotatable manner and comprises a closing face (36), which in an opening position fits flush against a surrounding wall of the respective flow channel (24, 26) and in a closing position closes the respective flow channel (24, 26).

5. Device (2) of one of the claims 1 to 3,
wherein the test closure (34, 56, 64, 70) can be deflected longitudinally into the respective flow channel (24, 26) for closing.

6. Device (2) of any of the preceding claims,
wherein the test closure (34, 56, 64, 70) is spring-mounted and without any external influence reverts independently from its closing position to its opening position.

7. Device (2) of any of the preceding claims,
wherein the test closure (34, 56, 64, 70) is constructed in such a manner that a coloured warning signal is clearly visible in a closing position.

8. Device (2) of one of the preceding claims,
wherein the test closure (34, 56, 64, 70) is constructed in such a manner that it can only be brought into a closing position through the use of a special tool and this special tool can only be removed when the test closure (34, 56, 64, 70) is in an opening position.

9. Method for testing one or more devices (2) for the protection of pipes against rupture of one of claims 1 to 8 in a system through which fluid flows, comprising the steps:
- initiation of the operation of the system;
- closing all test closures (34, 56, 64, 70);
- testing the reaction of the devices (2);
- interrupting the operation of the system.

10. Use of a device (2) of one of the claims 1 to 8 for protection of pipes against rupture in a system (50) in an aircraft (50) through which fluid flows.

11. Aircraft (50) comprising at least one hydraulic system (52), at least one hydraulic pipe (54) and at least one integrated device (2) for the protection of pipes against rupture that is capable of conducting an in situ functioning test, comprising:
- a housing (4) with an inflow (6) and an outflow (8);
- a closing element (10) mounted in a movable manner in the housing (4) with a front face facing the inflow (6) and a closing surface (16) facing the outflow (8);
- at least 2 flow channels (24, 26) extending from the inflow (6) to the outflow (8);
- at least one orifice (22), arranged in the flow channels (24, 26) to generate a pressure drop in a fluid flowing from the inflow (6) to the outflow (8), and
- at least one retainer element (18) arranged between the outflow (8) and the closing element (10);
wherein an inflow pressure of the fluid at the inflow (6) acts on the front face (14) of the closing element (10) and an outflow pressure of the fluid at the outflow (8) acts on the closing surface (16) of the closing element (10);
wherein the retainer element (18) is dimensioned in such a way that, at a predetermined minimum difference between the inflow pressure and the outflow pressure, the closing element (10) moves against a retaining force from the retainer element (18) towards the outflow (8) into a closing position;
wherein the device (2) also comprises at least one test closure (34, 56, 64, 70), that closes at least one of the flow channels (24, 26), so that the flow speed in the other flow channels (24, 26) is increased, the pressure drop through the orifice (22) increases and a movement of the closing element (10) is thus induced.

## Revendications

1. Dispositif (2) de sécurité hydraulique pour tuyauterie, présentant:
- un boîtier (4) comprenant une alimentation (6) et une évacuation (8);
- un élément de fermeture (10) monté mobile dans le boîtier (4) comportant une surface frontale (14) orientée vers l'alimentation (6) et une surface de fermeture (16) orientée vers l'évacuation (8);
- au moins deux canaux d'écoulement (24, 26) qui s'étendent depuis l'alimentation (6) jusqu'à l'évacuation (8);
- au moins un volet (22) disposé dans les canaux d'écoulement (24, 26) pour générer une chute de pression d'un fluide s'écoulant depuis l'alimentation (6) jusqu'à l'évacuation (8); et
- au moins un élément de retenue (18) disposé entre l'évacuation (8) et l'élément de fermeture (10);
dans lequel une pression d'alimentation du fluide régnant au niveau de l'alimentation (6) agit sur la surface frontale (14) de l'élément de fermeture (10) et une pression d'évacuation du fluide régnant au niveau de l'évacuation (8) agit sur la surface de fermeture (16) de l'élément de fermeture (10) ;
dans lequel l'élément de retenue (18) est dimensionné de telle sorte que l'élément de fermeture (10) se déplace dans une position de fermeture, dans le cas d'une différence minimale prédéfinie entre la pression d'alimentation et la pression d'évacuation, contre une force de retenue de l'élément de retenue (18) vers l'évacuation (8) ;
dans lequel le dispositif (2) présente en outre au moins un obturateur de contrôle (34, 56, 64, 70) qui obture au moins un des canaux d'écoulement (24, 26) de telle sorte que la vitesse d'écoulement augmente dans les autres canaux d'écoulement (24, 26), la chute de pression sur le volet (22) augmente, provoquant ainsi un déplacement de l'élément de fermeture (10) dans la position de fermeture.

2. Dispositif (2) selon la revendication 1,
dans lequel l'élément de fermeture (10) est monté mobile dans une portion de douille (12) du boîtier (4) qui est fermée par un couvercle (32),
dans lequel le couvercle (32) présente un étranglement (30) pour l'étranglement de l'écoulement du fluide.

3. Dispositif (2) selon la revendication 1 ou 2,
dans lequel l'obturateur de contrôle (34, 56, 64, 70) est monté mobile sur le boîtier (4) et le déplacement de l'obturateur de contrôle (34, 56, 64, 70) dans une position de fermeture ou dans une position d'ouverture permet d'obtenir une fermeture ou une ouverture d'un canal d'écoulement (24, 26).

4. Dispositif (2) selon une des revendications précédentes,
dans lequel l'obturateur de contrôle (34, 56, 64, 70) est monté rotatif et présente une surface d'obturation (36) qui, dans une position d'ouverture, se termine au même niveau qu'une paroi environnante du canal d'écoulement concerné (24, 26) et, dans une position de fermeture, obture le canal d'écoulement concerné (24, 26).

5. Dispositif (2) selon une des revendications 1 à 3,
dans lequel l'obturateur de contrôle (34, 56, 64, 70) est susceptible d'effectuer un écartement dans le sens de la longueur dans le canal d'écoulement concerné (24, 26) pour la fermeture.

6. Dispositif (2) selon une des revendications précédentes,
dans lequel l'obturateur de contrôle (34, 56, 64, 70) est monté de façon élastique et retourne automatiquement de sa position de fermeture dans sa position d'ouverture sans aucune action de l'extérieur.

7. Dispositif (2) selon une des revendications précédentes,
dans lequel l'obturateur de contrôle (34, 56, 64, 70) est agencé de telle sorte qu'une couleur d'avertissement doit être clairement visible dans une position de fermeture.

8. Dispositif (2) selon une des revendications précédentes,
dans lequel l'obturateur de contrôle (34, 56, 64, 70) est agencé de telle sorte qu'il ne peut être amené dans une position de fermeture qu'au moyen d'un outil spécial et l'outil spécial ne peut être attiré à nouveau dans une position d'ouverture que par l'obturateur de contrôle (34, 56, 64, 70).

9. Procédé de contrôle d'un ou de plusieurs dispositifs (2) de sécurité hydraulique pour tuyauterie, selon une des revendications 1 à 8, dans un système traversé par un fluide, présentant les étapes suivantes :
- démarrage du fonctionnement du système ;
- fermeture de tous les obturateurs de contrôle (34, 56, 64, 70) ;
- contrôle de la réaction des dispositifs (2).
- arrêt du fonctionnement du système.

10. Utilisation d'un dispositif (2) de sécurité hydraulique pour tuyauterie selon une des revendications 1 à 8 dans un système (52) d'un avion (50) qui est traversé par un fluide (50).

11. Avion (50) comprenant au moins un système hydraulique (52), au moins une tuyauterie hydraulique (54) et au moins un dispositif (2) de sécurité hydraulique pour tuyauterie se trouvant sur celle-ci, qui est adapté pour réaliser un contrôle de fonctionnement in situ, présentant :
- un boîtier (4) comportant une alimentation (6) et une évacuation (8) ;
- un élément de fermeture (10) monté mobile dans le boîtier (4) comportant une surface frontale orientée vers l'alimentation (6) et une surface de fermeture (16) orientée vers l'évacuation (8) ;
- au moins deux canaux d'écoulement (24, 26), qui s'étendent depuis l'alimentation (6) jusqu'à l'évacuation (8) ;
- au moins un volet (22) disposé dans les canaux d'écoulement (24, 26) pour produire une chute de pression d'un fluide s'écoulant depuis l'alimentation (6) jusqu'à l'évacuation (8) ; et
- au moins un élément de retenue (18) disposé entre l'évacuation (8) et l'élément de fermeture (10) ;
dans lequel une pression d'alimentation du fluide régnant au niveau de l'alimentation (6) agit sur la surface frontale (14) de l'élément de fermeture (10) et une pression d'évacuation du fluide régnant au niveau de l'évacuation (8) agit sur la surface de fermeture (16) de l'élément de fermeture (10) ;
dans lequel l'élément de retenue (18) est dimensionné de telle sorte que l'élément de fermeture (10) se déplace dans une position de fermeture, dans le cas d'une différence minimale prédéfinie entre la pression d'alimentation et la pression d'évacuation, contre une force de retenue de l'élément de retenue (18) vers l'évacuation (8) ;
dans lequel le dispositif (2) présente en outre au moins un obturateur de contrôle (34, 56, 64, 70) qui obture au moins un des canaux d'écoulement (24, 26) de telle sorte que la vitesse d'écoulement augmente dans les autres canaux d'écoulement (24, 26), la chute de pression sur le volet (22) augmente, provoquant ainsi un déplacement de l'élément de fermeture (10) dans la position de fermeture.
